# EUROPEAN PATENT APPLICATION

(11) **EP 3 934 026 A1**
(43) Date of publication of application: **05.01.2022**
(21) Application number: 21181994.1
(22) Date of filing: 28.06.2021
(51) Int. Cl.: H01R 4/30, H01R 13/44, H01R 4/10

(54) **MODULE CONNECTOR**

(30) Priority: 30.06.2020 DE 102020208149
(71) Applicant: TE Connectivity Germany GmbH, 64625 Bensheim (DE)
(72) Inventor: Wolf, Marcus, 64625 Bensheim (DE); Distler, Patrick, 64625 Bensheim (DE); Kähny, Frank, 73499 Wört (DE); Büchling, Chris, 64625 Bensheim (DE)
(74) Representative: Grünecker Patent- und Rechtsanwälte PartG mbB

(57) **Abstract**

Shown is a module connector (100) with two connection parts (10, 20) that can be connected to be electrically conductively connected, each of the connection parts (10, 20) comprising a mutually compatible attachment element (11, 21), wherein each connection part (10, 20) at a connection side facing the other connection part (20, 10) has a contact protection (110), comprising an outer, electrically insulating collar (111) and an electrically insulating protection pin (112) that is surrounded by the collar (111), wherein at at least at one of the connection parts (10, 20) between the collar (111) and the protection pin (112) a current bridge (120) is located, that is towered by the collar (111) and the protection pin (112), and wherein the at least one attachment element (11) comprises a connection geometry (18) for transferring force and momentum into a current bar (50), and wherein the attachment elements (11, 21) are configured that the one attachment element (11) can be inserted into the other attachment element (21).

## Description

The invention relates to a module connector. Such a module connector can be used, for example, when connecting batteries or battery cells in electric vehicles.

In order to avoid endangerment for users during connection, touch protection devices are often provided. Modular connectors are known, for example, with two electrically conductively interconnectable connection parts comprising a mutually compatible attachment element for attaching the connection parts to one another, wherein each connection part at its connection side facing the other connection part is provided with a contact protection comprising an outer, electrically insulating collar and an electrically insulating protection pin that is surrounded by the collar, wherein at at least one connection part between the collar and the protection pin a current bridge is located that is towered by the collar and the protection pin.

However, the known module connectors mostly require a lot of installation space. The aim of the invention is to provide a module connector that requires less installation space.

According to the invention, this is solved in that one attachment element comprises a connection geometry for transferring force and momentum into a current bar, and wherein the attachment elements are configured such that one attachment element can be inserted into the other attachment element.

Due to the fact that the connection geometry is fastened to the attachment element that is inserted into the other, the connection geometry can be made correspondingly smaller. As a result, the module connector is smaller in total. The corresponding current bar can consequently also be smaller, since a correspondingly smaller hole is required for the connection geometry.

The solution according to the invention can be further improved with the following further developments and configurations, each of which is preferred and can be arbitrarily combined with one another.

It is preferred if the one attachment element comprises an external thread and/or the other attachment element comprises an internal thread. This allows the installation space to be kept small, wherein at the same time a secure attachment is possible.

In order to compensate for height differences in a simple and space-saving manner, the other attachment element may comprise an extension section, which, when one attachment element is inserted, extends between the inserted one attachment element and a head of the other attachment element. An extension section may be present irrespective of whether an attachment geometry is present and, where applicable, where the attachment geometry is located.

The extension section may space apart an attachment section from an actuation section.

In an additional or alternative configuration, an extension section may be provided on the one connection part.

The extension section can comprise a solid cross-section. This allows a compact configuration with good stability. Solid can mean in particular that material is consistently present. Cavities, receptacles or similar empty spaces are not supposed to be present.

The extension section can have a smaller cross-section compared to an attachment section into which the one attachment element can be inserted. This may facilitate handling. The smaller cross-section may at least be present over the major portion of the extension section.

The extension section can have a smaller cross-section compared to an actuation section. This can increase safety. For example, the actuation section can then serve as a stop during an insertion process. The smaller cross-section may at least be present over the major portion of the extension section.

In an inserted state, the extension section can be spaced apart from a surrounding receptacle. This can be preferred, for example, to reduce surface pressure. For example, parts of the module connector may become hot during operation and expand as a result. If different materials are used, they may expand to different degrees. Due to the spacing, expansion is possible without leading to excessive surface pressures and/or damage. In particular, such spacing may be present along the entire circumference to allow for uniform expansion.

In order to keep the construction simple, the extension section may be designed to be threadless.

The extension section may extend below a head of the connection part to be as space-saving as possible.

In a preferred configuration, a length of the extension section is at least 30%, preferably at least 50%, of a total length of the connection part. This allows particularly good compensation in height.

To provide secure spacing, the extension section may have at least one radially projecting spacer. The spacer may project laterally from the extension section. The spacer may project transversely to a connection direction along which the two connection parts are connected. The spacer may project transversely to a plug-in direction along which an attachment element is plugged into further elements.

In an embodiment that is easy to assemble and/or has low susceptibility to tolerances, an outer width or diameter of the extension section at the location of the spacer may correspond to a width of the attachment section.

In other embodiments, the outer width or diameter may be smaller or larger than a width of the attachment section. This may facilitate mounting or improve susceptibility to tolerances.

A length of the spacer measured along a connection direction can be less than one-tenth of a total length of the attachment element. As a result, the surface pressure and material consumption can be kept low.

For a good guiding effect, the spacer may be located closer to an actuation section than to the attachment section.

In a simple configuration, the spacer may be integral with the remainder of the extension section.

In a preferred configuration, the spacer can be configured as a circumferential collar. This allows the design to be kept simple. For example, the spacer can be designed as a bead.

The connection geometry can be configured to be solid. In particular, hollow spaces or receptacles and an internal thread cannot be present in the area of the connection geometry. This allows the design to be kept compact and stable.

In order to prevent unintentional insertion too deep, a stop section that is wider than the connection geometry can be attached to the connection geometry. The stop section can limit the movement of the attachment element in the current bar along an insertion direction, particularly in the inserted state. The stop section can be designed as a head.

Between the connection geometry and the attachment section, there may be provided a base section. This can be used for secure attachment in the current bar. An outer contour of the base section may correspond to the inner contour of a receptacle in a current bar or be slightly smaller. A width may correspond to an inner diameter of the receptacle.

The connection geometry can be configured differently. For example, it can be a press-fit section for pressing into the current bar. The press-fit section can transfer force and momentum, in particular torque, by means of a frictional connection. The connection geometry, in particular the press-fit section, can be fastened to the current bar by a cold pressing process.

Alternatively or additionally, the connection geometry can transfer force or momentum to the current bar by means of toothing. For this purpose, the connection geometry can comprise toothing elements. The toothing elements can simultaneously function as press-fit elements and generate a frictional connection to increase the holding effect.

For secure attachment, the press-fit section can comprise press-fit elements projecting perpendicularly to the direction of insertion.

An outer contour of the connection geometry can be configured such that it generates a good clamping effect with an inner contour of a receptacle in the current bar. For this purpose, in the non-connected state, the outer contour can be slightly larger than the inner contour.

In order to facilitate insertion, the press-fit elements can be configured as press-fit strips running parallel to the direction of insertion. The press-fit elements can have a uniform cross-section to facilitate insertion.

In order to increase safety, a sealing element can be provided between a conductor and a housing part and/or between an attachment element and a conductor. The sealing element can seal an interior of a connection part from the outside and, for example, prevent the entry of liquids or dirt.

In a preferred configuration, the sealing element is arranged around the extension section. For example, the sealing element can be arranged between the spacer and the actuation section. In particular, the sealing element can be held by the spacer and the actuation section. The spacer and the actuation section can fulfill a dual function here and in particular prevent the sealing element from slipping.

In a preferred set, at least two connection parts are provided, wherein the connection parts comprise attachment elements of different lengths. This allows differences in height of different sizes to be compensated. The attachment elements can differ only with regard to the extension section and otherwise be identical.

Such a set may also be provided with a further connection part which can be connected to these two connection parts.

In the following, the invention is explained in more detail by means of preferred configurations with reference to the drawings. The preferred further developments and configurations shown are in each case independent of one another and can be combined with one another as desired, depending on how this is necessary in the application case.

It is shown by:
- Fig. 1: a schematic sectional view of a first embodiment of a modular connector;
- Fig. 2: a schematic sectional view of an attachment element of the modular connector of Fig. 1;
- Fig. 3: a schematic sectional view of a further attachment element of the modular connector of Fig. 1;
- Fig. 4: a schematic perspective view of an upper connection part of the module connector of Fig. 1;
- Fig. 5: a schematic perspective view of a lower connection part of the module connector of Fig. 1;

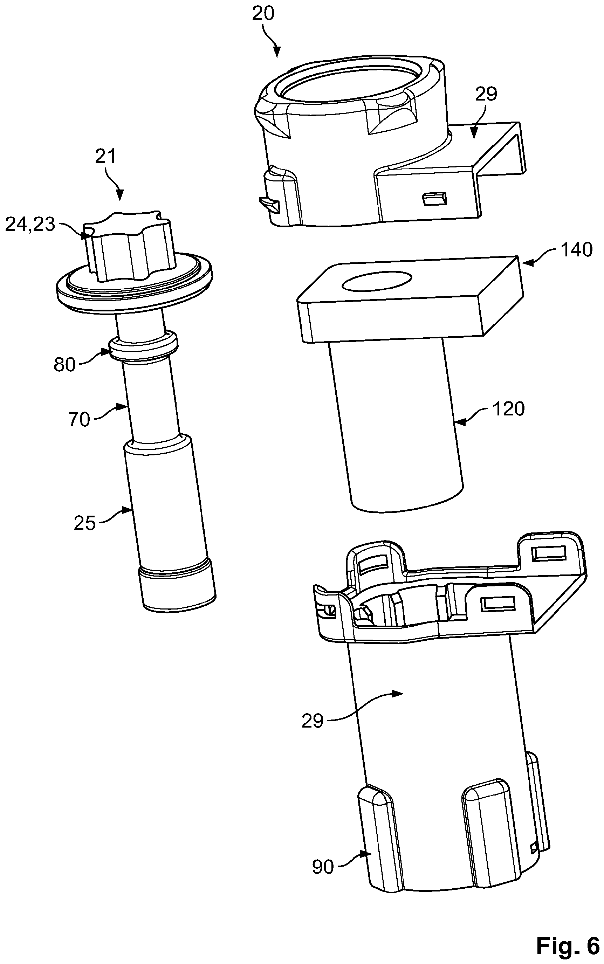

- Fig. 6: a schematic exploded view of the upper connection part of a second embodiment of a modular connector;

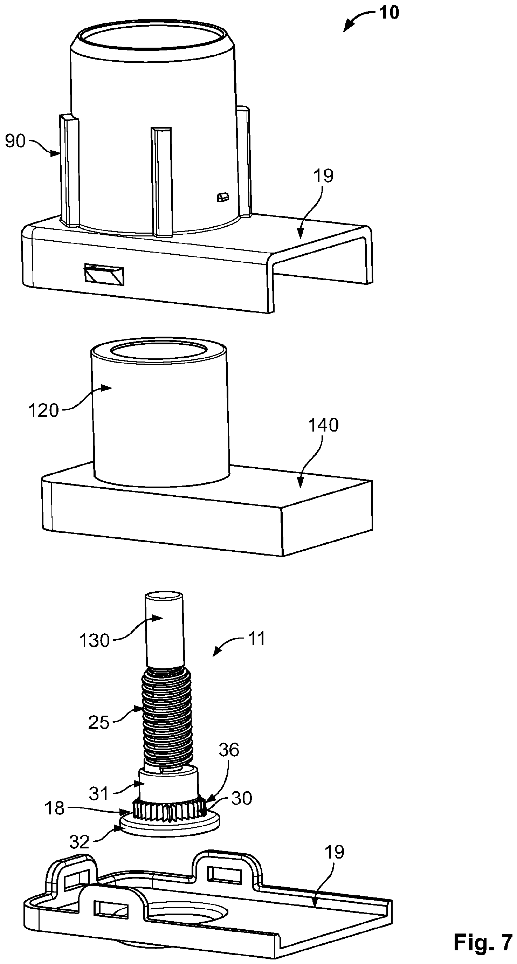

- Fig. 7: a schematic exploded view of the lower connection part of the second embodiment of a modular connector;

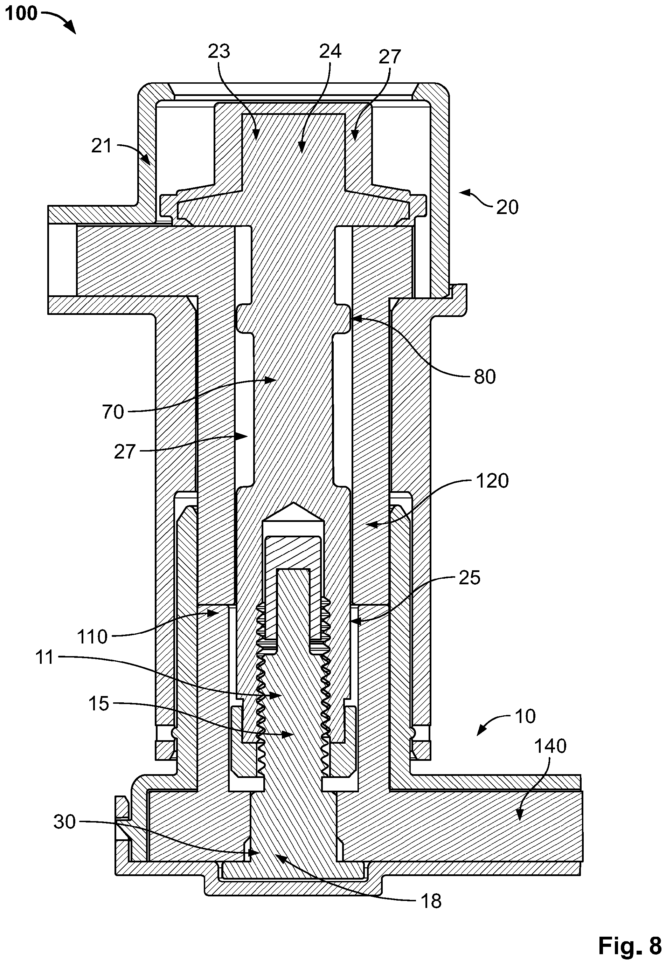

- Fig. 8: a schematic sectional view of the second embodiment of a modular connector;
- Fig. 9: a schematic sectional view of a third embodiment of a modular connector.

Various embodiments of module connectors 100 are shown in the Figures. These each comprise a first, lower connection part 10 with a first, lower attachment element 11 and a second, upper connection part 20 with a second, upper attachment element 21. In each case, the lower attachment element 11 can be inserted into the upper attachment element 21 and comprises a connection geometry 18 in the form of a press-fit section 30 for attachment to a current track 50. Due to the fact that the connection geometry 18 is fastened the lower attachment element 10, the overall construction can be more compact, since a receptacle 51 in the form of a hole in the current bar 50 can have a smaller configuration than it would be, if the upper attachment element 21 was able to be inserted into the lower attachment element 11.

Each of the connection parts 10, 20 also comprises a contact protection 110 that prevents a user from touching electrically conductive parts with a finger. For a standardized definition of a touch protection, defined test fingers can be used, for example, with which it is not possible to touch electrically conductive parts.

The contact protection 110 comprises in each case an outer, electrically insulating collar 111, which surrounds a protection pin 112. Furthermore, a current bridge 120 is provided on each connection part 10, 20 between the collar 111 and the protection pin 112 to establish an electrical connection. In the assembled state, the two current bridges 120, which are made of a material with good electrical conductivity, such as copper, are in contact with one another. In this regard, the current bridges 120 may be in one piece with the electrically conductive elements to be used, such as the current bar 50. In other configurations, the current bridges 120 may be separate elements.

The collars 111 are made of an electrically insulating material and may, for example, be in one piece with further insulating elements 19, 29, which provide insulation around the connection parts 10, 20. The protection pins 112 are each seen or provided at their front or tip with an insulating cap 130, which is also made of an insulating material and provides contact protection. The collars 111 and the protection pins 112 each tower the current bridges 120.

In order to fasten the two connection parts 10, 20 to one another, attachment elements 11, 21 made of mechanically stable material, for example steel, are provided. These in turn each comprise an attachment section 25, wherein the attachment sections 25 interact in the assembled state and fasten the two connection parts 10, 20 to one another.

The first, lower attachment element 11 comprises an external thread 61, which can be screwed to an internal thread 62 of the second, upper attachment element 12. The second attachment element 11 comprises a receptacle 26 into which the attachment section 25 of the lower attachment element 11 can be inserted and in which the internal thread 62 is located.

The upper attachment element 21 comprises an actuation section 24 at which the attachment element 21 can be actuated, for example, manually or with a machine. The actuation section 24 can be configured as a head 23, in particular as a screw head. The actuation section 24 may have an insulating element 27 made of an electrically insulating material on the outside to prevent electrical contact. The actuation section 24 may, for example, comprise a profile to allow rotation, such as for a screwing movement. The head 23 may further comprise a widened flange.

The connection geometry 18 in the form of the press-fit section 30 is followed along the insertion direction E by a base section 31, which does not necessarily have to achieve a clamping effect or a pressing effect, however, it can be adapted to an inner contour of the receptacle 51 in the current bar 50. Furthermore, a stop section 32, which may be configured as a head 33, is provided behind the press-fit section 30. The stop section 32 prevents further insertion of the attachment element 11 into the current bar 50.

A number of press-fit elements 35 are provided on the press-fit section 30, which in the examples shown have a constant cross-section along the insertion direction E. The press-fit elements 35 are designed as radially projecting strips. The press-fit elements 35 also serve as toothing elements 36, which help to prevent rotation of the lower attachment element 11 in the current bar.

The first embodiment and the second embodiment of the modular connector 100 each comprise an extension section 70 at the upper attachment element 21. The extension section 70 serves for height compensation along a connection direction V along which the lower connection part 10 is connected to the upper connection part 20. If such an extension section 70 was not provided, for example, the current bar 50 or an upper conductor 140 would have to be bent, which would increase the space requirement in a transverse direction Q running transversely to the connection direction V.

In the embodiments shown, the connection direction V runs parallel to an insertion direction E along which the lower attachment element 11 is inserted through the current bar 50. A plug-in direction I, along which the upper attachment element 21 is plugged into further elements of the upper connection part 20, runs in the embodiment opposite to the insertion direction E and opposite to the connection direction V.

In the area of the extension section 70, the attachment element 21 is configured narrower than in the area of the attachment section 25 and in the area of the actuation section 24. A width B27 of the extension section 70 measured along the transverse direction Q is smaller than a width B25 of the attachment section 25.

A receptacle 78 is provided between the extension section 70 and further existing elements in the assembled state. The extension section 70 is spaced apart from the further existing elements in the assembled state. This can be preferable, since different parts can expand to different degrees when heated. Since the extension section 70 does not directly abut the further elements, at least over the major portion of the extension section 70, the surface pressure is low.

In order to ensure such spacing, a spacer 80 may be provided on the extension section 70. The spacer 80 can project radially or laterally, for example in a radial direction or a transverse direction Q. Preferably, the spacer 80 is configured in one piece with the remainder of the extension section 70. The spacer 80 can be configured, for example, as a circumferential collar 81 or as a bead. The spacer 80 can be closed along the entire circumference, thus along 360 degrees. The spacer 80 can also be configured differently, for example, as an element not completely running around the entire circumference. Four projections offset by 90 degrees can be given merely by way of example.

A width B28 of the extension section 70 at the location of the spacer 80, which may be a diameter in the case of an annularly circumferential collar 81, is greater than the width B27 at the other locations of the extension section 70. In the example shown, the width B28 corresponds to the width B25 of the attachment section 25. This allows use with a channel having a consistent cross-section at the lower attachment element 11. However, the width B28 at the location of the spacer 80 may be different in other configurations, slightly larger or smaller than the width B25 of the attachment section 25.

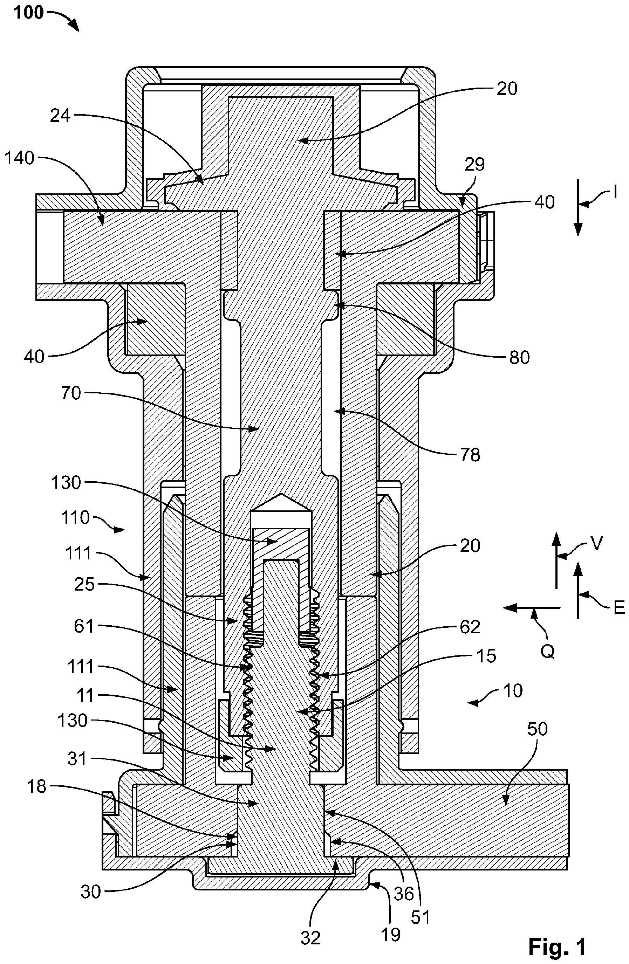

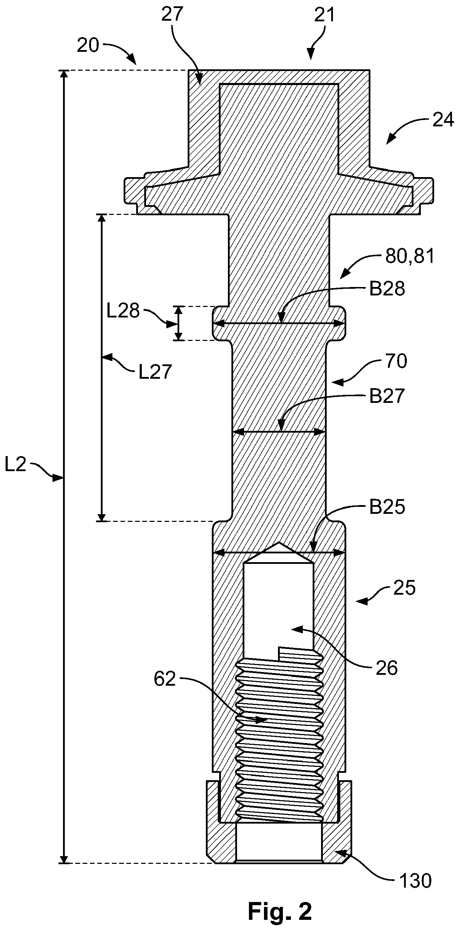

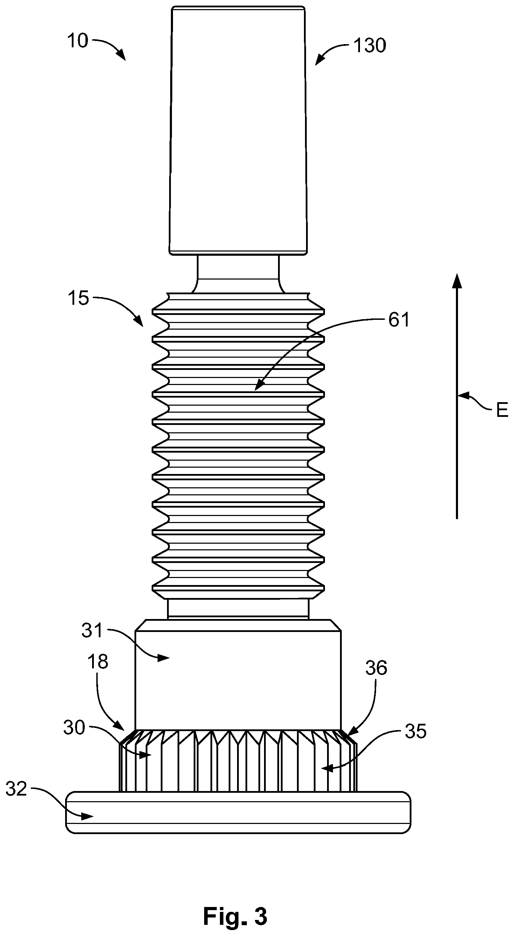

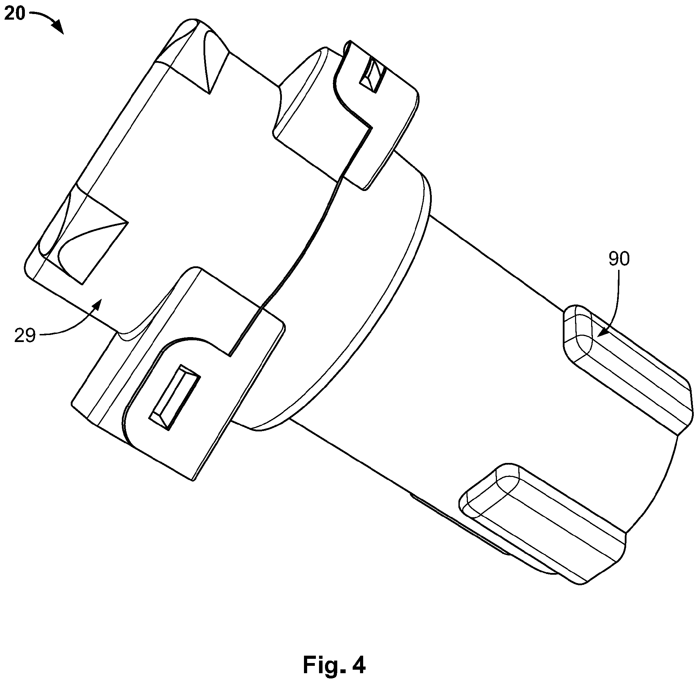

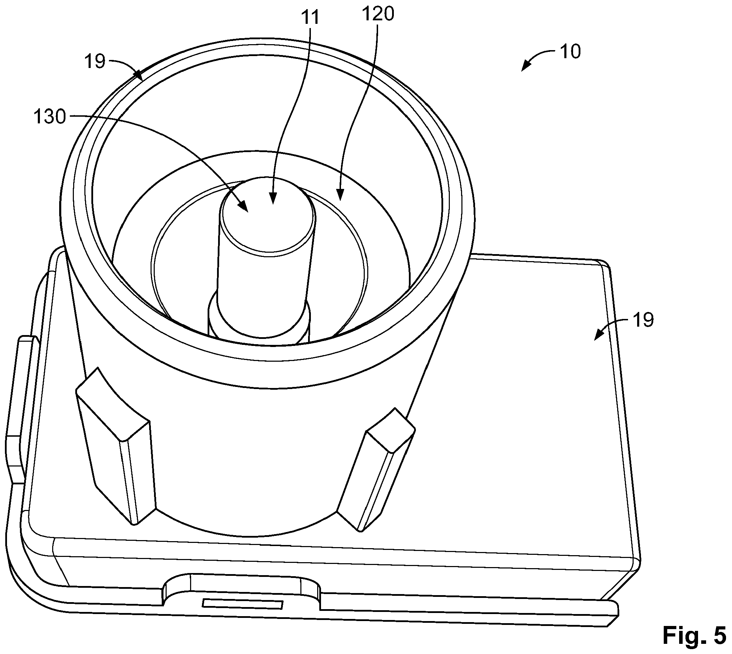

In the first embodiment according to Figures 1 to 5, two sealing elements 40 are further provided, which protect an interior space against the entry of liquids or dust. The sealing elements 40 are for example made of an elastic material to achieve a good sealing effect. Preferably, one of the sealing elements 40 is arranged between the spacer 80 and the head 23 and is held by these along the connecting direction V. A further sealing element 40 is provided between an insulating element 29 and the conductor 140.

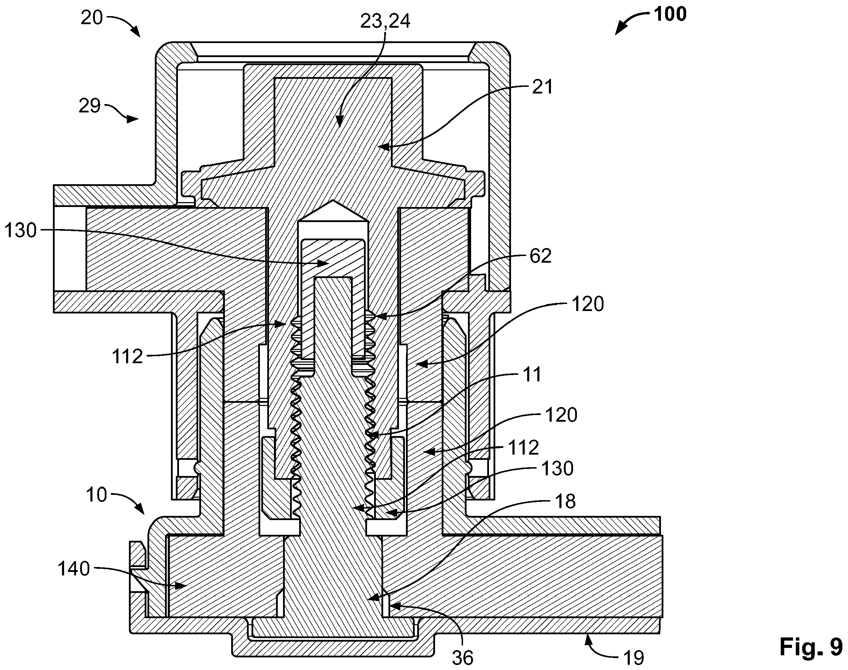

The extension section 70 can be shorter or longer depending on the desired height offset. In the third embodiment according to Fig. 9, no extension section 70 is provided to enable the most compact configuration possible along the connection direction V.

In the first two embodiments, when the attachment element 11 is inserted, the extension section 70 extends between the inserted attachment element 21 and the head 23, namely between the attachment section 15 of the lower attachment element 21 and the head 23 of the upper attachment element 23. Furthermore, when the attachment element 11 is inserted, the extension section 70 extends between the attachment section 25 of the upper attachment element 21 and the head 23.

The spacer 80 is closer to the head 23 than to the attachment section 25. This allows the spacer 80 to provide a guiding effect that minimizes tolerances in the area of the attachment sections 15, 25.

Alternatively or additionally to the embodiments shown, an extension section 70 may also be provided on the lower attachment element 11.

The extension section 70 may comprise a length L27 that is greater than 10 percent, preferably greater than 20 percent, more specifically greater than 30 percent, in particular greater than 50 percent of the total length L2 of the upper attachment element 21. In this context, the lengths may be measured along the connection direction V.

The extension section 70 can be configured to be threadless.

The length L28 of the spacer 80 is preferably less than 20 percent, specifically less than 10 percent, of the total length L2 of the upper attachment element 21. Furthermore, the length L28 of the spacer may be less than 20 percent, specifically less than 10 percent, of the length L27 of the actuation section 24.

The extension section 70 may comprise a solid cross-section.

The connection geometry 18, in this case the press-fit section 30, can comprise a solid cross-section. In particular, there may be no cavities or internal threads in the area of the connection geometry 18.

In order to allow the connection parts 10, 20 to be fastened to one another only in certain angular positions, coding elements 90 may be provided.

The solution according to the invention aims to enable adaptation to different height offsets by simple means. This can be achieved, for example, by using extension sections 70 of different lengths or attachment elements 21 of different lengths. In a corresponding set with two connection parts 20, the connection parts 20 can comprise attachment elements 21 of different lengths. In one of the connection parts 20 there can be no extension section 70.

Such a set may include, in addition to two different second connection parts 20, a first connection part 10 which can be connected to both second connection parts 20.

### Reference Signs

- 10: lower connection part
- 11: attachment element
- 15: attachment section
- 18: connection geometry
- 19: insulating element
- 20: upper connection part
- 21: attachment element
- 23: head
- 24: actuation section
- 25: attachment section
- 26: receptacle
- 27: insulating element
- 29: insulating element
- 30: press-fit section
- 31: base section
- 32: stop section
- 33: head
- 35: press-fit element
- 36: toothing element
- 40: sealing element
- 50: current bar
- 51: receptacle
- 61: external thread
- 62: internal thread
- 70: extension section
- 78: receptacle
- 80: spacer
- 81: collar
- 90: coding element
- 100: module connector
- 110: contact protection
- 111: collar
- 112: protection pin
- 120: current bridge
- 130: insulating cap
- 140: conductor
- E: insertion direction
- I: plug-in direction
- V: connection direction
- Q: transverse direction
- L2: total length of the upper attachment element
- L27: length of the extension section
- L28: length of the spacer
- B25: width of the attachment section
- B27: width of the extension section
- B28: width of the location of the spacer

## Claims

1. Module connector (100) with two connection parts (10, 20) that can be connected to be electrically conductively connected, each of the connection parts (10, 20) comprising a mutually compatible attachment element (11, 21), wherein each connection part (10, 20) at a connection side facing the other connection part (20, 10) has a contact protection (110), comprising an outer, electrically insulating collar (111) and an electrically insulating protection pin (112) that is surrounded by the collar (111), wherein at at least at one of the connection parts (10, 20) between the collar (111) and the protection pin (112) a current bridge (120) is located, that is towered by the collar (111) and the protection pin (112), and wherein the at least one attachment element (11) comprises a connection geometry (18) for transferring force and momentum into a current bar (50), and wherein the attachment elements (11, 21) are configured that the one attachment element (11) can be inserted into the other attachment element (21).

2. Module connector (100) according to claim 1, wherein the one attachment element (11) comprises an external thread (61) and/or the other attachment element (21) comprises an internal thread (62).

3. Module connector (100) according to claim 1 or 2, wherein the other attachment element (21) comprises an extension section (70), which, when one attachment element (11) is inserted, extends between the inserted one attachment element (11) and a head (23) of the other attachment element (21).

4. Module connector (100) according to claim 3, wherein the extension section (70) has a solid cross-section and/or a smaller cross-section compared to an attachment section (25) into which the one attachment element (11) can be inserted.

5. Module connector (100) according to one of claims 3 or 4, wherein the extension section (70) comprises at least one radially projecting spacer (80).

6. Module connector (100) according to claim 5, wherein an outer width (B28) or diameter of the extension section (70) at the location of the spacer (80) corresponds to a width (B25) of the attachment section (25).

7. Module connector (100) according to claim 5 or 6, wherein the spacer (80) is located closer to an actuation section (24) than to the attachment section (25).

8. Module connector (100) according to one of claims 5 to 7, wherein the spacer (80) is in one piece with the remainder of the extension section (70).

9. Module connector (100) according to one of claims 5 to 8, wherein the spacer (80) is configured as a circumferential collar (81).

10. Module connector (100) according to one of claims 1 to 9, wherein the connection geometry (18) is configured as a press-fit section (30) for pressing into the current bar (50).

11. Module connector (100) according to one of claims 1 to 10, wherein the connection geometry (18) is configured to be solid.

12. Module connector (100) according to one of claims 10 or 11, wherein the press-fit section (30) comprises press-fit elements (35) projecting perpendicularly to an insertion direction (E).

13. Module connector (100) according to one of claims 1 to 12, wherein a sealing element (40) is provided between a conductor (140) and a housing part (29) and/or between an attachment element (21) and a conductor (140).

14. Set with two connection parts (20), wherein the connection parts (20) comprise attachment elements (21) of different lengths.

15. Set comprising two different connection parts (21) according to claim 14, and a further connection part (11) which can be connected to both connection parts (21).
